# EUROPEAN PATENT SPECIFICATION

(11) **EP 0 573 119 B1**
(45) Date of publication and mention of the grant of the patent: **30.10.1996**
(21) Application number: 93201559.7
(22) Date of filing: 01.06.1993
(51) Int. Cl.: B65G 13/07, B65G 13/071, B65G 47/26

(54) **Roller conveyor**
Rollenförderer
Convoyeur à rouleaux

(30) Priority: 31.05.1992 NL 9200958
(43) Date of publication of application: 08.12.1993
(73) Proprietor: STORK CONVEYOR SYSTEMS B.V., NL-4941 VL Raamsdonksveer (NL)
(72) Inventor: van Loon, Mattheus Adrianus Ymard, NL-5151 ND Drunen (NL)
(74) Representative: Boelsma, Gerben Harm, Ir.

(56) References cited:
- FR-A- 2 614 282
- US-A- 2 001 773
- US-A- 3 176 828
- US-A- 4 091 916
- US-A- 4 103 769

## Description

The invention relates to a conveyor of the type, provided with a series of carrying rollers which are rotatably mounted in a frame about parallel axes, and with a driving belt passing under these carrying rollers, said belt being pressed into friction contact with the carrying rollers by means of pressure rollers, which are mounted on the free ends of carrying arms which extend substantially parallel to the carrying rollers and are swingably mounted for adjustment through a small angle.

Such a conveyor is disclosed in US-A-4.091.916. With this well-known roller conveyor the pressure rollers are positioned directly below the carrying rollers so that the places of contact between the driving belt and the carrying rollers coincide with those between the driving belt and the underlying pressure rollers. This means that there is only a limited area of contact between the carrying rollers and the driving belt, said contact being in principle no more than the contact along a line parallel to the roller axis. Furthermore, the driving belt in the well-known conveyor is of a circular cross-sectional form so that in reality there is only a point contact between the carrying rollers and the driving belt. Consequently the transfer of power through the driving belt to the carrying rollers is rather limited. This is particularly disadvantageous in a special embodiment of such a conveyor, in which use is made of excentrically mounted carrying rollers, which are - as a consequence of the excentric mounting - contacted by the underlying driving belt during only a portion of each revolution. Due to the inertia of the carrying rollers the latter will keep rotating also during the interval in which there is no contact with the driving belt. Assuming a load travelling on such rotating carrying rollers is stopped (for example by a load in front of it) the respective carrying rollers will come to a standstill at the time the contact with the driving belt is interrupted. This causes the load to keep stationary, up to the moment, at which the carrying rollers are activated again by means of pads or "dogs" which are provided on the driving belt at longitudinally spaced intervals and are bridging the excentricity of the carrying rollers. Particularly with such a type of conveyor, called "accumulating roller conveyor", it is important that the pressure rollers can be adjusted to the correct pressure (which may e.g. be dependent of the size and the weight of the loads to be conveyed).

In accordance with the present invention the above mentioned drawback is removed in a simple and effective manner, in that the pressure rollers engage the driving belt at locations between adjacent carrying rollers, whereas the circumferential surface of said pressure rollers is slightly convex in shape.

By having the pressure rollers engage the driving belt at locations between the carrying rollers, the contact between the driving belt and each of the carrying rollers will, as seen in the direction of rotation, take place along an arc of a circle. Furthermore the convex shape of the pressure rollers enables to use a flat and wider driving belt and to press this belt to the carrying rollers with a larger or smaller contact pressure. For, when such a pressure roller is swung from a horizontal central position upwardly through an angle in the order of e.g. 1°, an increase in contact pressure between the driving belt and the ("higher" portions of the excentric) carrying rollers will take place. The convex shape of the pressure rollers causes the driving belt to shift across the pressure roller surface in a direction turned away from the swinging point and to adjust itself according to the shifted highest point of the pressure roller surface. This secures the driving belt to be kept in contact with the carrying rollers with an even pressure.

Conversely a downward swinging adjustment will cause the driving belt to shift across the pressure roller surface in a direction towards the swinging point.

It is to be noted that roller conveyors, in which pressure rollers are pressed - at intermediate locations - against a driving belt passing under the carrying rollers, are well-known per se. In these well-known conveyors the pressure rollers are mounted for vertical adjustment, the vertical adjustment taking place by turning an adjustment screw at both ends of each pressure roller. Taking into consideration, that in most cases adjustments in the order of millimeters and fractions of millimeters are involved, it will be understood, that such a manner of making adjustments will lead to inaccuracies in the overall adjustment and that it will be also very time consuming in case of rather lengthy conveyors having many pressure rollers.

As remarked hereinabove with respect to the well-known embodiments, a rather small height-adjustment range and consequently - in case of the embodiment according to the present invention - a rather small adjustment angle (which in practice will be e.g. between 1° and 2°), is involved. Therefore a slight degree of convexness will be enough to make sure that within the angular adjustment range the highest point of the pressure roller surface will be kept at a sufficient distance (in the order of half of the driving belt width) from the highest positioned end of the pressure roller.

It is further to be noted that it is commonly known to urge a belt that is guided over rollers or sheaves to follow the right track by giving the rollers or sheaves a slightly convex shape.

Further characteristics of the invention will be hereinafter further explained by way of example with reference to the drawing.
Fig. 1 shows a cross-section through a side portion of a conveyor according to the invention, with the pressure roller in a (horizontal) central position;
fig. 2 is a cross-sectional view along the line II-II in fig. 1;
fig. 3 shows a cross-sectional view similar to that of fig. 1, but now with the pressure roller in the uppermost position and
fig. 4 shows a cross-sectional view similar to that of fig. 1, but now with the pressure roller in the lowermost position.

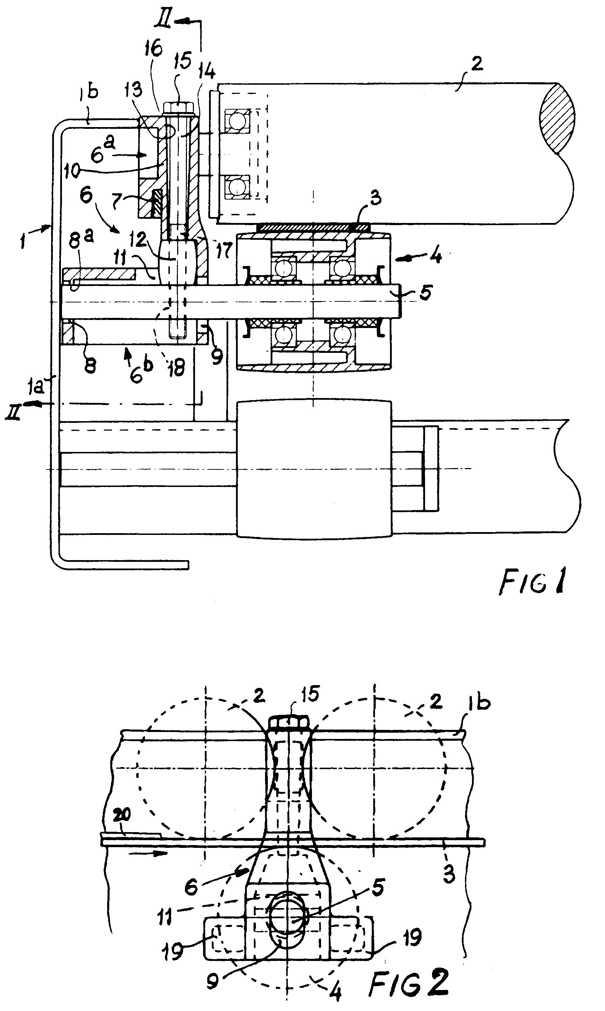

In the example shown in the drawing the conveyor has a frame, which is mainly formed by two parallel longitudinal beams, one of which being shown in the drawing and indicated at 1. A series of carrying rollers 2 is mounted between the two frame beams for rotation about parallel axes. The way of supporting of the carrying rollers 2 corresponds with that of the well-known conveyors of the type under consideration and will therefore not be described in further detail. For the spacing between the successive carrying rollers 2 (which may have a diameter in the order of 50 mm) reference is made to fig. 2.

3 designates a driving belt which passes under the carrying rollers 2 at one side of the conveyor. This drive belt may e.g. be constituted by the upper run of a driven endless belt which is guided, at the ends of the conveyor over guide rollers (not shown in the drawing) and which is kept in a tensioned state by tensioning rollers (neither shown) which are positioned at the lower run of the endless belt.

The driving belt 3 is supported by a series of pressure rollers 4, the rotating axes of which are each positioned substantially directly under the space between two successive carrying rollers 2 (vide fig. 2). The number of pressure rollers 4 is e.g. half the number of carrying rollers 2, so that alternately a pressure roller and no pressure roller respectively is positioned under the successive spaces between the carrying rollers.

The width of the pressure rollers 4 is a fraction of the length of the carrying rollers 2 and is slightly larger than the width of the driving belt 3. The pressure rollers 4 are rotatably mounted on the free end portion of a stationary supporting axle 5 which is extended towards the frame beam 1; the pressure rollers 4 are slightly convex in shape.

The supporting axles 5 are each supported by a substantially L-shaped support body 6, which has its vertical flange 6a hooked about a support strip 7 fixed to the frame beam 1 and has the free end of its horizontal flange 6b leaning against the innerside of the vertical web 1a of the frame beam 1 and fixed to the latter by means of fastening screws (not shown) which extend through lug-shaped projections 19 of the horizontal flange 6b (vide fig. 2).

The hollow shaped horizontal flange 6b, supporting the supporting axle 5, is closed at its free end by a thin endwall 8, a circular opening 8a being provided in said wall to support the respective end of the supporting axle 5 with a close fit. The small fitness of the endwall 8 allows a certain universal swinging movement of the supporting axle 5 around the center of the opening in said endwall. At the opposite end of the horizontal flange 6b, at the angular point of the L, a vertical slot 9 is provided, the width of which corresponds with the diameter of the supporting axle 5. Due to this slot the universal swinging movement allowed by the opening in the endwall 8 is limited to an up and down swinging movement in the vertical plane. The vertical flange 6a of the L-shaped body 6 comprises a tubular portion 10 the free end of which is located substantially in the plane of the upper flange 1b of the frame beam 1. At a certain distance from the horizontal flange 6b the tubular portion merges into a widened chamber 11, containing a block 12 of rubber or similar resilient material which is locked in place between the supporting axle 5 and the lower end of the tubular portion 10.

An adjusting screw 14 extends - with clearance - through the bore 13 of the tubular portion 10 and has its head 15 bearing on the upper end face of the vertical L-flange with the intermediary of a washer 16, whereas the threaded shaft portion 17 of the screw extends through a correspondingly threaded radial bore 18 of the supporting axle 5.

By turning the adjusting screw 14 to extend further or less downwardly through the radial bore 18 of the supporting axle 5, the latter may be swung through a slight angle upwardly or downwardly about the centre of the bearing opening 8a.

In fig. 1 the supporting axle 5 is taking a horizontal central position, parallel to the rotating axes of the supporting rollers 2. The driving belt 3 is positioned in the central portion of the convex supporting surface of the pressure roller 4 and consequently also takes a horizontal position as seen in the transverse direction.

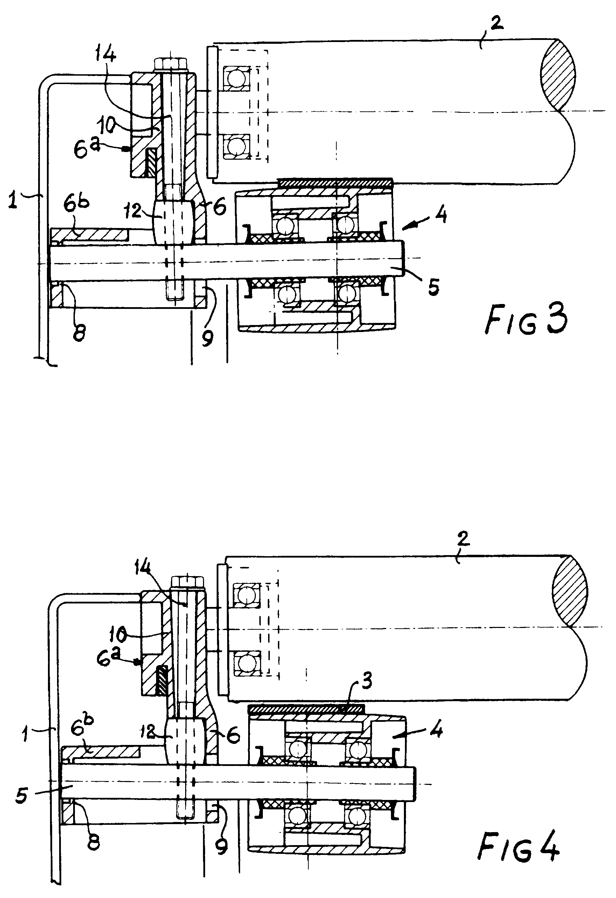

By turning the adjustment screw - starting from the central position in fig. 1 - in the home direction the screw will be threaded further downwardly through the radial bore 18 in the supporting axle, due to which the supporting axle is slightly swung upwardly and thereby compress the block 12 (vide fig. 3). As a result of this the driving belt at the location of the respective pressure roller 4 will be slightly displaced upwardly as compared with the position in fig. 1. Simultaneously the driving belt 3 will be slightly shift to the right and so keep its horizontal transverse position due to the convex shape of the pressure roller 4. Consequently the driving belt 3 will exert an increased bu (in the transverse direction) evenly distributed pressure onto the adjacent supporting rollers.

If, however, the adjustment screw 14 is turned anti-clockwise so that it is threaded slightly upwardly from the radial bore 18 in the supporting axle 5, the rubber block 12 will be permitted to relax and cause the supporting axle 5 to swing downwardly through a slight angle. This leads to a position as shown in fig. 4, in which the driving belt is shifted across the convex supporting surface of the pressure roller 4 to the left, while it has kept its horizontal transverse position parallel to the axes of the supporting rollers 2.

In fig. 4 the driving belt 3 is shown out of contact with the adjacent supporting rollers 2. This case may be illustrative for a conveyor having excentrically journalled supporting rollers (e.g. having an excentricity in the order of 1 mm) at a moment, at which the surface line with the largest radial distance to the supporting roller axis is positioned at the upper side of the roller. At regularly spaced intervals (e.g. with a spacing of 4-5 m) thickenings, such as the pad 20 in fig. 2, are provided on the driving belt 3.

The shown position may also be considered representative of an embodiment with centrically journalled rollers, in which case the respective pressure roller is shown in an inoperative position, caused by a downwardly directed swinging movement.

The pressure roller mounting on a swingable supporting axle is also applicable in those cases, in which it must be possible to put a certain section of an accumulating conveyor out of operation, e.g. pneumatically.

## Claims

1. A conveyor of the type, provided with a series of carrying rollers (2) which are rotatably mounted in a frame (1) about parallel axes, and with a driving belt (3) passing under these carrying rollers (2), said belt (3) being pressed into friction contact with the carrying rollers (2) by means of pressure rollers (4), which are mounted on the free ends of carrying arms (5) which extend substantially parallel to the carrying rollers (2) and are swingably mounted for adjustment through a small angle, characterized in that the pressure rollers (4) engage the driving belt (3) at locations between adjacent carrying rollers (2), and that the circumferential surface of said pressure rollers (4) is slightly convex in shape.

2. A conveyor according to claim 1, characterized in that the carrying arm (5) is formed by a stationary supporting axle which is extended to one side, said axle (5) engaging - at its end turned away from the respective pressure roller (4) - into a seat (8a) in the frame that permits a swinging movement in a vertical plane, whereas a connecting member (14) of an adjustable length is provided, that engages the supporting axle (5) at a place between the pressure roller (4) and the supported axle end and connects said place to a fixed point of the frame positioned directly thereunder or above.

3. A conveyor according to claim 2, characterized in that the supporting axle (5) is accommodated in the hollow space of the horizontal flange (6b) of a substantially L-shaped support body (6), that is removably mounted in a longitudinal beam (1) of the conveyor frame, said flange (6b) being at its free end turned away from the pressure roller (4) that leans against the web (1a) of said frame beam, closed by a thin end wall (8) through which the supporting axle extends with a close fit, whereas the supporting axle (5) is extending through a vertical guiding slot (9) provided at the angular point of the L.

4. A conveyor according to claims 2 and 3, characterized in that said connecting member (14) of adjustable length is formed by an adjusting screw (14), extending through the tubular vertical flange (6a) of the L-shaped support body (6), the lower portion of said vertical flange (6a) being formed by a piece (12) of rubber or similar resilient material resting on the support axle (5), the lower, threaded end (17) of said adjusting screw (14) extending through a correspondingly threaded radial bore (18) in the said axle (5), whereas the screw head (15) is bearing on the upper end face of the vertical flange (6a) of the L-shaped body (6).

## Patentansprüche

1. Förderer mit einer Reihe von Tragrollen (2), die um parallele Achsen drehbar in einem Rahmen (1) gehalten sind, und mit einem Antriebsriemen (3), der unter den Tragrollen (2) verläuft, wobei der Riemen (3) mittels Druckrollen (4), die an den freien Enden von im wesentlichen parallel zu den Tragrollen (2) verlaufenden und zur Verstellung über einen kleinen Winkel schwenkbar gelagerten Tragarmen (5) angebracht sind, in Reibkontakt mit den Tragrollen (2) gedrückt ist, dadurch gekennzeichnet, daß die Druckrollen (4) mit dem Antriebsriemen (3) an Stellen zwischen benachbarten Tragrollen (4) in Anlage stehen und daß die Umfangsfläche der Druckrollen (4) leicht konvex geformt ist.

2. Förderer nach Anspruch 1, dadurch gekennzeichnet, daß der Tragarm (5) von einer ortsfesten Lagerachse gebildet ist, die nach einer Seite verlängert ist, wobei die Achse (5) an ihrem der jeweiligen Druckrolle (4) abgewandten Ende in einen Sitz (8a) im Rahmen eingreift, der eine Schwenkbewegung in einer vertikalen Ebene zuläßt, wobei ein Verbindungsteil (14) einstellbarer Länge vorgesehen ist, das mit der Lagerachse (5) an einer Stelle zwischen der Druckrolle (4) und dem gelagerten Achsenende in Eingriff steht und das die Stelle mit einem festen, direkt unter- oder oberhalb angeordneten Punkt des Rahmens verbindet.

3. Förderer nach Anspruch 2, dadurch gekennzeichnet, daß die Lagerachse (5) in einem Hohlraum des horizontalen Schenkels (6b) eines im wesentlichen L-förmigen Lagergehäuses (6) aufgenommen ist, das abnehmbar in einem Längsträger (1) des Fördererrahmens gehalten ist, wobei der Schenkel (6b) an seinem freien Ende von der Druckrolle (4) abgewandt ist und sich an der Wand (1a) des Rahmenträgers anlehnt und von einer dünnen Endwand (8) verschlossen ist, durch die sich die Lagerachse mit engem Sitz erstreckt, wobei die Lagerachse (5) durch einen vertikalen Führungsschlitz (9) verläuft, der am Eckpunkt des L ausgebildet ist.

4. Förderer nach Anspruch 2 oder 3, dadurch gekennzeichnet, daß das Verbindungsteil (14) einstellbarer Länge von einer Einstellschraube (14) gebildet ist, die durch den rohrförmigen vertikalen Schenkel (6a) des L-förmigen Lagergehäuses (6) verläuft, wobei der untere Abschnitt des vertikalen Schenkels (6a) von einem Stück (12) aus Gummi oder einem ähnlichen elastischen Material gebildet ist, das auf der Lagerachse (5) aufsitzt, wobei das untere, mit Gewinde versehene Ende (17) der Einstellschraube (14) durch eine mit einem entsprechenden Gewinde versehene radiale Bohrung (18) in der Achse (5) verläuft und der Schraubenkopf (15) an der oberen Endfläche des vertikalen Schenkels (6a) des L-förmigen Gehäuses (6) gehalten ist.

## Revendications

1. Convoyeur du type équipé d'une succession de rouleaux porteurs (2) qui sont montés rotatifs dans un châssis (1) autour d'axes parallèles, et d'une courroie d'entraînement (3) passant sous ces rouleaux porteurs (2), ladite courroie (3) étant comprimée en-contact frottant avec les rouleaux porteurs (2) au moyen de rouleaux de pression (4), qui sont montés sur les extrémités libres de bras porteurs (5) qui s'étendent sensiblement parallèlement aux rouleaux porteurs (2) et sont montés basculants pour un réglage sur un petit angle, caractérisé en ce que les rouleaux de pression (4) viennent en contact avec la courroie d'entraînement (3) en des emplacements entre les rouleaux porteurs adjacents (2) et en ce que la surface circonférentielle desdits rouleaux de pression (4) a une forme légèrement convexe.

2. Convoyeur selon la revendication 1, caractérisé en ce que le bras porteur (5) est formé d'un axe de support stationnaire qui s'étend sur un côté, ledit axe (5) s'engageant, à son extrémité tournant le dos au rouleau de pression respectif (4), dans un siège (8a) dans le châssis qui permet un mouvement basculant dans un plan vertical, alors qu'un élément de liaison (14) de longueur réglable est prévu pour s'engager dans l'axe de support (5) en un endroit entre le rouleau de pression (4) et l'extrémité supportée de l'axe et relier ledit endroit à un point fixe du châssis positionné directement en-dessous ou au-dessus.

3. Convoyeur selon la revendication 2, caractérisé en ce que l'axe de support (5) est logé dans un espace creux de la bride horizontale (6b) d'un corps de support (6) sensiblement en forme de L, qui est monté amovible dans une poutre longitudinale (1) du châssis de convoyeur, ladite bride (6b) tournant le dos, à son extrémité libre, au rouleau de pression (4) qui repose contre l'âme (1a) de ladite poutre de châssis, et étant fermée par une fine paroi d'extrémité (8) à travers laquelle l'axe de support s'étend avec un ajustement serré, alors que l'axe de support (5) s'étend à travers une fente de guidage verticale (9) prévue au point angulaire du L.

4. Convoyeur selon les revendications 2 et 3, caractérisé en ce que ledit élément de liaison (14) de longueur réglable est formé d'une vis de réglage (14) s'étendant à travers la bride verticale tubulaire (6a) du corps de support (6) en forme de L, la portion inférieure de ladite bride verticale (6a) étant formée d'une pièce (12) en caoutchouc ou matériau élastique similaire reposant sur l'axe de support (5), l'extrémité filetée inférieure (17) de ladite vis de réglage (14) s'étendant à travers un alésage radial taraudé correspondant (18) dans ledit axe (5), alors que la tête de vis (15) repose sur la face d'extrémité supérieure de la bride verticale (6a) du corps (6) en forme de L.
